# FASCICULE DE BREVET EUROPEEN

(11) **EP 3 416 306 B1**
(45) Date de publication et mention de la délivrance du brevet: **16.12.2020**
(21) Numéro de dépôt: 18177325.0
(22) Date de dépôt: 12.06.2018
(51) Int. Cl.: H04B 10/114, H04B 10/116

(54) **ÉMETTEUR À MODULATION M-PAM POUR SYSTÈME DE COMMUNICATION OPTIQUE SANS FIL**
M-PAM-MODULATIONSSENDER FÜR DRAHTLOSES OPTISCHES KOMMUNIKATIONSSYSTEM
M-PAM MODULATION TRANSMITTER FOR WIRELESS OPTICAL COMMUNICATION SYSTEM

(30) Priorité: 12.06.2017 FR 1755219
(43) Date de publication de la demande: 19.12.2018
(73) Titulaire: Commissariat à l'énergie atomique et aux énergies alternatives, 75015 Paris (FR)
(72) Inventeur: MARET, Luc, 38210 POLIENAS (FR); LAUGEOIS, Marc, 38000 GRENOBLE (FR); POPON, Xavier, 38180 SEYSSINS (FR)
(74) Mandataire: Brevalex

(56) Documents cités:
- CN-A- 103 986 516
- US-A1- 2016 156 417
- US-A1- 2016 164 604

## Description

### DOMAINE TECHNIQUE

La présente invention concerne de manière générale le domaine des communications optiques sans-fil et plus particulièrement celui des systèmes de communication Li-Fi (*Light Fidelity*).

### ÉTAT DE LA TECHNIQUE ANTÉRIEURE

Les systèmes de communications optiques sans fil ou OWC (Optical Wireless Communications) ont fait dernièrement l'objet d'importantes recherches en raison de leur capacité à résoudre le problème d'occupation spectrale et à compléter voire à se substituer aux systèmes Wi-Fi.

De manière schématique, les systèmes Li-Fi sont analogues aux systèmes Wi-Fi (obéissant à la norme IEEE 802.11) mais utilisent le spectre visible au lieu du spectre RF. La couche physique (PHY) et la couche MAC des systèmes Li-Fi ont déjà fait l'objet d'une normalisation dans le standard IEEE 802.15.7.

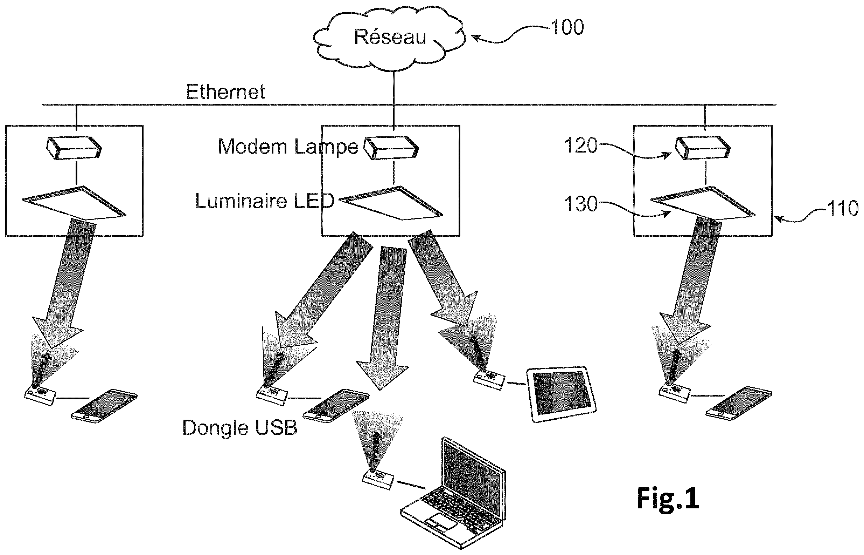

La Fig. 1 représente de manière schématique un exemple de système Li-Fi.

Une pluralité de points d'accès lumineux ou APs, 110, sont connectés au réseau principal, 100, au moyen de liaisons Ethernet. Chaque point d'accès est constitué d'un modem 120 couplé à une source lumineuse à LED, 130, émettant dans le domaine visible, le modem modulant le courant d'alimentation de la source de manière à moduler l'intensité de la lumière émise. Les terminaux sont équipés d'un dongle incluant un récepteur optique. Ce récepteur optique reçoit le signal lumineux, le convertit en signal électrique, le démodule et récupère les données émises. Inversement, le dongle (ou le terminal lui-même) est également équipé d'une diode infrarouge. Les données à transmettre sur la voie montante modulent alors le signal infrarouge. Le signal infrarouge est reçu par une photodiode (non représentée) montée sur le point d'accès, puis est démodulé pour transmettre les données vers le réseau principal (réseau Ethernet ou autre).

La modulation des signaux optiques sur la voie montante comme sur la voie descendante est une modulation non-cohérente avec une détection directe au niveau du récepteur. Différents types de modulation ont été proposés dans la littérature pour tenir compte de la nature réelle et unipolaire du signal lumineux. Ainsi, les modulations OOK (*On Off Keying*), PAM (*Pulse Amplitude Modulation*), PPM (*Pulse Position Modulation*), DCO-OFDM (*Direct-Current Optical OFDM*), SIM-OFDM (*Subcarrier Index Modulation OFDM*) ont été envisagées.

La modulation PAM a notamment été préconisée sur la voie montante. En effet, elle présente tout d'abord l'avantage de réduire la consommation énergétique du terminal en raison de l'absence de polarisation DC (contrairement notamment à la modulation DCO-OFDM). Ensuite, elle permet de déporter l'égalisation de canal du côté du point d'accès. Cette égalisation est généralement réalisée dans le domaine fréquentiel, ce qui ne nécessite que l'insertion d'un préfixe cyclique du côté de l'émetteur. Ainsi, les ressources de calcul du terminal, qui peuvent être relativement contraintes, ne sont pas sollicitées. Un système de communication avec modulation M-PAM (PAM à M niveaux) à l'émission et égalisation dans le domaine fréquentiel à la réception été ainsi proposé dans l'article de M.M.A. Mohammed et al. intitulé « A spectrally efficient unipolar PAM single-carrier frequency domain equalization for IM/DD systems » publié dans 2015 IEEE Proc. of Photonics Conf. (IPC), Reston, VA, pp. 246-247.

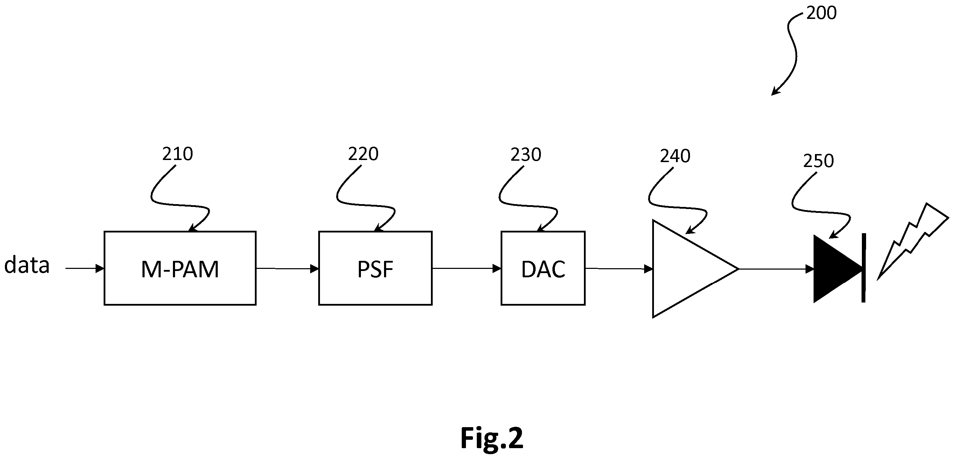

La Fig. 2 représente de manière schématique la structure d'un émetteur à modulation M-PAM pour un système de communication optique sans fil.

Les données à émettre (mots binaires) sont modulées par un modulateur M-PAM (PAM à M niveaux), 210. Les symboles M-PAM ainsi obtenus sont ensuite filtrés au moyen d'un filtre de mise en forme 220 puis convertis en un signal analogique par un DAC 230. Le filtrage de mise en forme a notamment pour objet de réduire l'interférence entre canaux adjacents. Le signal analogique est ensuite amplifié (en tension ou en courant) par un amplificateur 240 avant de piloter une source LED 250, par exemple une source LED infrarouge pour la voie montante et une source LED blanche (par exemple une LED bleue avec luminophore) pour la voie descendante.

L'émetteur de la Fig. 2 présente toutefois l'inconvénient de nécessiter un convertisseur numérique/ analogique (DAC).

La demande de brevet CN-A-103986516 décrit un émetteur d'un système de communication optique, permettant de se passer d'un tel convertisseur. Les données à transmettre sont démultiplexées sur une pluralité de voies binaires, chaque voie binaire effectuant une modulation OOK (équivalente à modulation 2-PAM) et commutant une source LED correspondante dans le domaine visible. L'addition au niveau de la photodiode des signaux optiques émis en parallèle par les différentes sources LED permet de simuler une modulation M-PAM. Toutefois, cette configuration présente l'inconvénient de nécessiter autant de sources LED que de niveaux de modulation (M) et de synchroniser l'émission de ces différentes sources. En outre, elle ne fonctionne pas de manière satisfaisante lorsque les caractéristiques des canaux entre les différentes sources LED et la photodiode du récepteur ne sont pas identiques. Un autre document de l'état de l'art US2016/156417 décrit un émetteur pour système de communication optique sans fil adapté à générer des signaux PAM à M niveaux au moyen d'une source optique (VCSEL). Ce système comprend une pluralité de branches en parallèle passant par des transistors, chaque branche comprenant une source de courant, le courant généré par les sources de courant étant injecté soit dans une première branche alimentant la source laser soit dans une seconde branche alimentant une diode de caractéristique électrique identique à celle de la diode laser.

Le but de la présente invention est par conséquent de proposer un émetteur pour système de communication optique, en particulier pour la voie montante d'un système Li-Fi, qui soit particulièrement simple et robuste, notamment en ce qu'il ne nécessite ni un ensemble de sources LED ni un convertisseur numérique analogique.

### EXPOSÉ DE L'INVENTION

La présente invention est définie par un émetteur pour système de communication optique sans fil comprenant un modulateur *M* -PAM transformant des données à transmettre en des symboles d'alphabet PAM à *M* niveaux où *M* > 2 et une source optique destinée à transmettre lesdites données, ledit émetteur comprenant :
- un module de conversion adapté à convertir, à partir d'une table de conversion biunivoque, chaque symbole *M* -PAM en une pluralité de sorties logiques ;
- une pluralité de branches en parallèle, chaque branche comprenant une source de courant commutée, montée en série avec la source optique, chaque source de courant commutée étant contrôlée par une sortie logique du module de conversion.

Selon un premier mode de réalisation, le module de conversion est adapté à convertir chaque symbole *M* -PAM en un mot binaire de taille *M* -1, les intensités des sources de courant commutées ayant une valeur identique (*I*₀).

Le module de conversion est alors adapté à convertir chaque symbole *M* -PAM en un mot binaire comprenant *n* bits dans un premier état logique et *N -n* bits dans un état logique complémentaire, *n* étant le niveau du symbole *M* -PAM.

Avantageusement, le mot binaire est un mot de code thermométrique.

Selon un second mode de réalisation, le module de conversion est adapté à convertir chaque symbole *M* -PAM en un mot binaire de taille *µ* = *log*₂(*M*), les intensités des sources de courant commutées ayant des valeurs égales à *I*₀, 2*I*₀, ..., 2^{*µ*-1} *I*₀ où *I*₀ est une valeur d'intensité prédéterminée.

Selon une variante du second mode de réalisation, le module de conversion est adapté à convertir chaque symbole *M* -PAM en un mot binaire de taille *µ* = log₂(*M*), l'intensité de la source de courant commutée connectée à la sortie logique *m* = 0, ..., *µ*-1 du module de conversion étant choisie de manière à ce que la puissance lumineuse de la source optique soit égale à 2*^{m}*Φ₀ où Φ₀ est une puissance lumineuse prédéterminée.

Selon une première configuration, chacune des branches est disposée en série entre la source optique et la masse, chaque branche comprenant un transistor et une résistance en série, la base du transistor étant connectée à une sortie logique correspondante du module de conversion.

Selon une seconde configuration, chaque branche comprenant un groupe de transistors en parallèle et une résistance en série, les bases desdits transistors dudit groupe étant connectées à une même sortie logique du module de conversion.

Le système de communication optique est par exemple un système Li-Fi. La source optique est typiquement une LED.

### BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :
La Fig. 1, déjà décrite, représente schématiquement un exemple de système Li-Fi, connu de l'état de la technique ;
La Fig. 2, déjà décrite, représente schématiquement un émetteur à modulation M-PAM pour un système de communication optique sans fil connu de l'état de la technique ;
La Fig. 3 représente schématiquement la structure d'un émetteur à modulation M-PAM pour système de communication optique sans fil, selon un premier mode de réalisation de l'invention ;
La Fig. 4 représente schématiquement la structure d'un émetteur à modulation M-PAM pour système de communication optique sans fil, selon un second mode de réalisation de l'invention.

### EXPOSÉ DÉTAILLÉ DE MODES DE RÉALISATION PARTICULIERS

On considérera dans la suite un émetteur pour un système de communication optique sans fil, par exemple un système de communication Li-Fi. La source optique utilisée par l'émetteur peut être une source LED, une source laser, une diode laser de type VCSEL (*Vertical-Cavity Surface-Emitting Laser*) ou autre. Aucune hypothèse n'est faite ici sur le spectre d'émission : la source optique peut être monochromatique ou émettre dans une large bande spectrale. En particulier, si l'émetteur est utilisé pour la voie montante d'un système Li-Fi, la source optique pourra être une LED infrarouge.

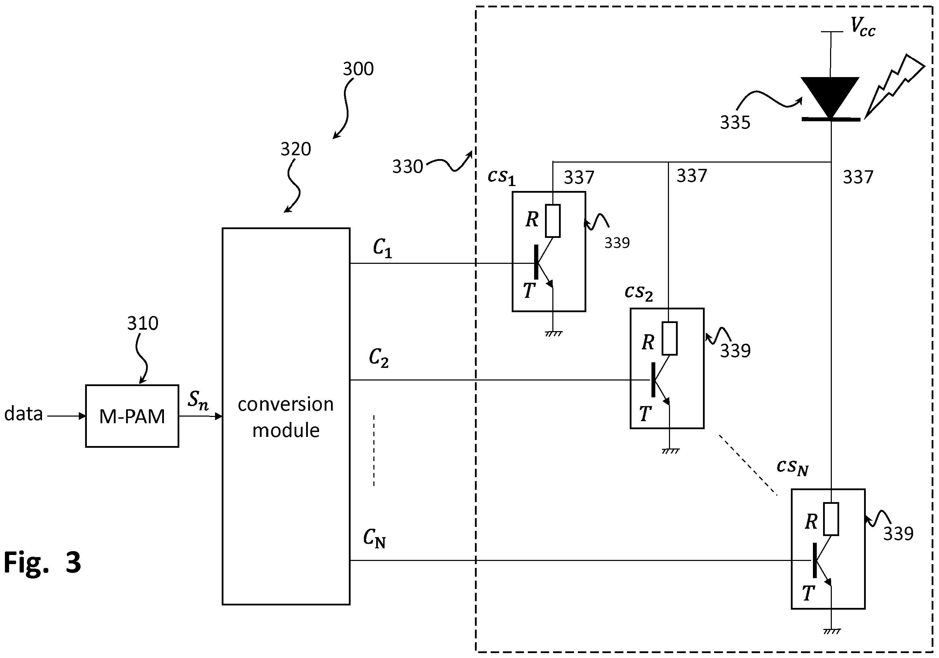

La Fig. 3 représente schématiquement la structure d'un émetteur à modulation M-PAM pour système de communication optique sans fil, selon un premier mode de réalisation de l'invention.

L'émetteur 300 comprend un modulateur M-PAM, 310, modulant les données binaires en symboles M-PAM. Plus précisément, chaque mot binaire (de taille maximale log₂(*M*)) est transformé par le modulateur en un symbole M-PAM. Les symboles M-PAM sont ensuite fournis à un module de conversion, 320, faisant correspondre à un symbole de modulation M-PAM, *Sₙ,* 0 ≤ *n* ≤ *N,* avec *N* = *M* - 1 (où *M* est la taille de l'alphabet PAM) un mot binaire de *N* bits comprenant *n* bits dans un premier état logique et *N - n* bits dans un état logique complémentaire.

On trouvera ci-après un exemple de table de conversion pour le cas *M* = 8 (*N* = 7):

| Symbole 8-PAM | C₁ | C₂ | C₃ | C₄ | C₅ | C₆ | C₇ |
|---|---|---|---|---|---|---|---|
| S₀ | 0 | 0 | 0 | 0 | 0 | 0 | 0 |
| S₁ | 1 | 0 | 0 | 0 | 0 | 0 | 0 |
| S₂ | 1 | 1 | 0 | 0 | 0 | 0 | 0 |
| S₃ | 1 | 1 | 1 | 0 | 0 | 0 | 0 |
| S₄ | 1 | 1 | 1 | 1 | 0 | 0 | 0 |
| S₅ | 1 | 1 | 1 | 1 | 1 | 0 | 0 |
| S₆ | 1 | 1 | 1 | 1 | 1 | 1 | 0 |
| S₇ | 1 | 1 | 1 | 1 | 1 | 1 | 1 |

Les symboles 8-PAM en entrée sont notés *S*₀, ..., *S*₇ et le mot en sortie du module de conversion est noté *C*₁, ..., *C*₇. On notera que les bits du mot de sortie présentant la première valeur logique (ou la valeur logique complémentaire) ne sont pas nécessairement contigus comme dans l'exemple ci-dessus mais peuvent occuper des emplacements arbitraires.

Le modulateur M-PAM, 310, et le module de conversion, 320, sont avantageusement réalisés au moyen d'un circuit programmable FPGA ou d'un circuit intégré dédié de type ASIC, voire au moyen d'un processeur numérique de signal DSP.

Selon un mode particulier de réalisation, la combinaison du modulateur M-PAM, 310, et du module de conversion, 320, est réalisée au moyen d'un transcodeur binaire à thermométrique, codant des mots binaires de log₂(*M*) bits en mots de *N* bits. On rappelle que l'alphabet d'un code thermométrique sur *N* bits est constitué de *M* mots, chaque mot étant constitué de 0 ≤ *n* ≤ *N* bits de LSB ayant une première valeur logique (par exemple « 1 »), les *N -n* bits de MSB ayant une valeur logique complémentaire. Ainsi, par exemple, pour *M* = 8, le mot binaire « 101 » est codé « 0011111 ».

Quel que soit le mode de réalisation envisagé, chaque sortie logique *C*₁, ..., *C_{N}* du module de conversion commande une source de courant commutée, *cs*₁, ..., *cs_{N}*, d'un module du générateur optique, 330. Ce générateur optique comprend une source optique, par exemple une LED, 335 et une pluralité *N* de branches parallèles, 337, chacune de ces branches étant disposée en série avec la source optique entre une source d'alimentation *V_{cc}* et la masse. Chaque branche 337 comprend une source de courant commutée, 339, par une sortie logique du module de conversion 320. Par exemple, chaque branche comprend un transistor *T* fonctionnant en mode saturé-bloqué, monté en série avec une résistance *R*. Le transistor peut être un transistor bipolaire ou un transistor MOS. Les caractéristiques des transistors (*T*) et les valeurs des résistances (*R*) sont choisies identiques dans les différentes branches. Ainsi, les sources de courant génèrent toutes un courant identique *I*₀ et le courant d'émission de la source optique (LED IR par exemple) peut varier de 0 à *NI*₀ en fonction de la donnée à émettre. Toutefois, si les caractéristiques des transistors dans les différentes branches ne sont pas rigoureusement identiques, on pourra avantageusement procéder à une phase de calibration des résistances pour que les courants générés par les sources de courant commutées soient néanmoins identiques.

Chaque source de courant commutée peut être réalisée par la mise en parallèle d'un groupe de transistors, si le courant de saturation d'un seul transistor s'avère insuffisant. Dans ce cas, une sortie logique du module de conversion contrôle en parallèle les bases des transistors dudit groupe.

On remarquera que contrairement à l'art antérieur, l'émetteur optique ne nécessite qu'une seule source lumineuse, l'addition des intensités élémentaires étant réalisée dans le domaine électrique et non dans le domaine optique.

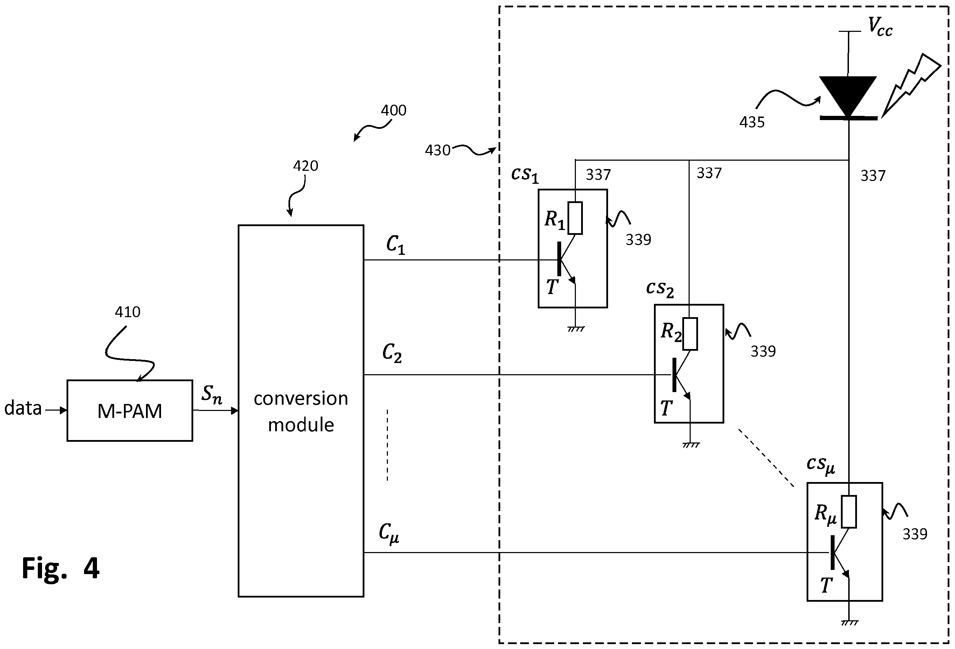

La Fig. 4 représente schématiquement la structure d'un émetteur à modulation M-PAM pour système de communication optique sans fil, selon un second mode de réalisation de l'invention.

Ce mode de réalisation diffère du premier en ce que les sorties logiques du module de conversion sont pondérées et que les courants dans les différentes branches le sont également.

Plus précisément, l'émetteur optique comprend un modulateur M-PAM, 410, et un module de conversion 420. Le module de conversion, 420, faisant correspondre à chaque symbole de modulation M-PAM, *Sₙ,* 0 *≤ n ≤ N,* avec *N* = *M* - 1 un mot binaire de *µ* = log₂(*M*) bits.

Comme dans le premier mode de réalisation, le modulateur M-PAM, 410, et le module de conversion, 420, sont avantageusement réalisés au moyen d'un circuit programmable FPGA ou d'un circuit intégré dédié de type ASIC, voire au moyen d'un processeur numérique de signal DSP.

Selon un exemple, le module de conversion peut utiliser une table de conversion particulièrement simple, dans laquelle on fait correspondre à chaque symbole *Sₙ,* le niveau de modulation *n* exprimé en binaire, sur *µ* = log₂(*M*) bits, *C*₁, ..., *C_{µ}*. Ainsi, pour le cas *M* = 8 :

| symbole 8-PAM | C₁ | C₂ | C₃ |
|---|---|---|---|
| S₀ | 0 | 0 | 0 |
| S₁ | 1 | 0 | 0 |
| S₂ | 0 | 1 | 0 |
| S₃ | 1 | 1 | 0 |
| S₄ | 0 | 0 | 1 |
| S₅ | 1 | 0 | 1 |
| S₆ | 0 | 1 | 1 |
| S₇ | 1 | 1 | 1 |

Dans cet exemple de réalisation particulièrement simple, la combinaison du modulateur M-PAM et du module de conversion peut être réalisée par un simple convertisseur série/parallèle, 3 bits successifs en entrée du modulateur formant un mot en sortie du module de conversion. Bien entendu, toutefois, d'autres tables de conversion sont possibles en permutant les lignes et/ou les colonnes de la table ci-dessus.

Quel que soit la table de conversion envisagée, chaque sortie logique *C*₁, ..., *C_{µ}* du module de conversion commande une source de courant commutée, *cs*₁, ..., *cs_{µ}*, d'un module du générateur optique, 430. A la différence du premier mode de réalisation, les sources de courant commutées sont d'intensités différentes, la source de courant commutée *csₘ*, *m* = 1, .., *µ* générant un courant d'intensité 2^{*m*-1}*I*₀ où *I*₀ est le courant générée par la source de courant *cs*₁, associé au LSB du mot en sortie du module de conversion.

Le générateur optique 430 comprend comme précédemment une source optique 435 (par exemple une LED) et une pluralité de branches parallèles, 437, chacune de ces branches étant disposée en série avec la source optique entre une source d'alimentation *V_{cc}* et la masse. A la différence du premier mode de réalisation toutefois, le nombre de branches est ici égal à *µ*. Une branche m comprend une source de courant 439, désignée par *csₘ,* commutée par *Cₘ,* et d'intensité 2^{*m*-1}*I*₀. La source de courant commutée peut être réalisée par un transistor opérant en mode saturé-bloqué en série avec une résistance *Rₘ*. Les valeurs des résistances *Rₘ* sont déterminées, le cas échéant lors d'une phase de calibration, de sorte que les courants générés par *cs*₁, ..., *cs_{µ}* soient égaux à *I*₀, 2*I*₀, ..., 2^{*µ*-1}*I*₀. Ainsi, les sources de courant d'émission de la source optique (LED IR par exemple) peut varier de 0 à *NI*₀ en fonction de la donnée à émettre.

Alternativement, selon une variante du second mode de réalisation, pour tenir compte des non-linéarités éventuelles de la source optique, les courants des sources de courant commutées sont choisies de manière à ce que l'intensité lumineuse de la source optique prenne les valeurs Φ₀, 2*I*₀, ..., 2^{*µ*-1}Φ₀ (où Φ₀ est une puissance lumineuse prédéterminée), lorsque les sources de courant *cs*₁, ..., *cs_{µ}* sont respectivement activées. Pour ce faire, les résistances sont réglées en conséquence dans une phase de calibration, la résistance *Rₘ, m* = 0, .... *µ* - 1 étant choisie telle que l'intensité lumineuse de la source optique soit égale à 2*^{m}*Φ₀ lorsque la source de courant *csₘ* est activée et que les autres sources de courant sont coupées.

Il est important de noter que l'émetteur selon le premier ou le second mode de réalisation peut également mettre en œuvre une seconde modulation en sus de la modulation M-PAM. Par exemple, on pourra prévoir que les sorties logiques commandant la commutation des sources de courant sont également modulées en position d'impulsion ou PPM (Pulse Position Modulation) pour offrir un degré de modulation supplémentaire ou bien en largeur d'impulsion ou PWM (Pulse Width Modulation) de manière à pouvoir effectuer une gradation du niveau d'éclairage.

En outre, dans le premier mode de réalisation comme dans le second mode de réalisation, on pourra ne pas utiliser le mot de commande *C*₁ = *C*₂ = *...C_{N}* = 0 (correspondant à une intensité de courant nulle) pour coder un symbole PAM, ce afin de distinguer le symbole en question d'une absence de transmission, due à une panne par exemple.

## Revendications

1. Emetteur pour système de communication optique sans fil comprenant un modulateur *M* -PAM (310,410) transformant des données à transmettre en des symboles d'alphabet PAM à *M* niveaux où *M* > 2 et une source optique (335,435) destinée à transmettre lesdites données, **caractérisé en ce qu'**il comprend :
- un module de conversion (320,420) adapté à convertir, à partir d'une table de conversion biunivoque, chaque symbole *M* -PAM en une pluralité de sorties logiques ;
- une pluralité de branches en parallèle (337,437), chaque branche comprenant une source de courant commutée (339, 439), montée en série avec la source optique, chaque source de courant commutée étant contrôlée par une sortie logique du module de conversion.

2. Emetteur selon la revendication 1, **caractérisé en ce que** le module de conversion est adapté à convertir chaque symbole *M* -PAM en un mot binaire de taille *M* -1, les intensités des sources de courant commutées ayant une valeur identique (*I*₀).

3. Emetteur selon la revendication 2, **caractérisé en ce que** le module de conversion est adapté à convertir chaque symbole *M* -PAM en un mot binaire comprenant *n* bits dans un premier état logique et *N -n* bits dans un état logique complémentaire, *n* étant le niveau du symbole *M* -PAM.

4. Emetteur selon la revendication 3, **caractérisé en ce que** le mot binaire est un mot de code thermométrique.

5. Emetteur selon la revendication 1, **caractérisé en ce que** le module de conversion est adapté à convertir chaque symbole *M* -PAM en un mot binaire de taille *µ* = log₂(*M*), les intensités des sources de courant commutées ayant des valeurs égales à *I*₀, 2*I*₀, ..., 2^{*µ*-1}*I*₀ où *I*₀ est une valeur d'intensité prédéterminée.

6. Emetteur selon la revendication 1, **caractérisé en ce que** le module de conversion est adapté à convertir chaque symbole *M* -PAM en un mot binaire de taille *µ* = log₂(*M*), l'intensité de la source de courant commutée connectée à la sortie logique *m* = 0, *...*, *µ*-1 du module de conversion étant choisie de manière à ce que la puissance lumineuse de la source optique soit égale à 2*^{m}*Φ₀ où Φ₀ est une puissance lumineuse prédéterminée.

7. Emetteur selon l'une des revendications précédentes, **caractérisé en ce que** chacune des branches est disposée en série entre la source optique et la masse, chaque branche comprenant un transistor et une résistance en série, la base du transistor étant connectée à une sortie logique correspondante du module de conversion.

8. Emetteur selon l'une des revendications 1 à 6, **caractérisé en ce que** chacune des branches est disposée en série entre la source optique et la masse, chaque branche comprenant un groupe de transistors en parallèle et une résistance en série, les bases desdits transistors dudit groupe étant connectées à une même sortie logique du module de conversion.

9. Emetteur selon l'une des revendications précédentes, **caractérisé en ce que** le système de communication optique est un système Li-Fi.

10. Emetteur selon l'une des revendications précédentes, **caractérisé en ce que** la source optique est une LED.

## Patentansprüche

1. Sender für ein drahtloses optisches Kommunikationssystem, umfassend einen *M*-PAM-Modulator (310, 410), der zu übertragende Daten in Alphabetsymbole PAM mit *M* Niveaus transformiert, wobei *M* > 2, sowie eine optische Quelle (335, 435), die dazu ausgelegt ist, die Daten zu übertragen, **dadurch gekennzeichnet, dass** er umfasst:
- ein Konversionsmodul (320, 420), das dazu ausgelegt ist, ausgehend von einer eineindeutigen Konversionstabelle jedes *M*-PAM-Symbol in eine Mehrzahl von logischen Ausgaben zu konvertieren;
- eine Mehrzahl von parallelen Zweigen (337, 437), wobei jeder Zweig eine geschaltete Stromquelle (339, 439) umfasst, die in Reihe mit der optischen Quelle montiert ist, wobei jede geschaltete Stromquelle durch eine logische Ausgabe des Konversionmoduls gesteuert wird.

2. Sender nach Anspruch 1, **dadurch gekennzeichnet, dass** das Konversionsmodul dazu ausgelegt ist, jedes *M*-PAM-Symbol in ein binäres Wort der Größe *M* - 1 zu konvertieren, wobei die Intensitäten der geschalteten Stromquellen einen identischen Wert (*I*₀) haben.

3. Sender nach Anspruch 2, **dadurch gekennzeichnet, dass** das Konversionsmodul dazu ausgelegt ist, jedes *M*-PAM-Symbol in ein binäres Wort zu konvertieren, das *n* Bits in einem ersten logischen Zustand und *N* - *n* Bits in einem komplementären logischen Zustand umfasst, wobei *n* das Niveau des *M*-PAM-Symbols ist.

4. Sender nach Anspruch 3, **dadurch gekennzeichnet, dass** das binäre Wort ein thermometrisches Codewort ist.

5. Sender nach Anspruch 1, **dadurch gekennzeichnet, dass** das Konversionsmodul dazu ausgelegt ist, jedes *M* -PAM-Symbol in ein binäres Wort der Größe *µ* = log₂ (*M*) zu konvertieren, wobei die Intensitäten der geschalteten Stromquellen Werte gleich *I*₀, 2*I*₀, ..., 2^{*µ*-1}*I*₀ haben, wobei *I*₀ ein vorbestimmter Intensitätswert ist.

6. Sender nach Anspruch 1, **dadurch gekennzeichnet, dass** das Konversionsmodul dazu ausgelegt ist, jedes *M* -PAM-Symbol in ein binäres Wort der Größe *µ* = log₂ (*M*) zu konvertieren, wobei die Intensität der geschalteten Stromquelle, die verbunden ist mit dem logischen Ausgang *m* = 0, ..., *µ* - 1 des Konversionsmoduls derart gewählt ist, dass die Lichtleistung der optischen Quelle gleich 2*^{m}*Φ₀ ist, wobei Φ₀ eine vorbestimmte Lichtleistung ist.

7. Sender nach einem der vorhergehenden Ansprüche, **dadurch gekennzeichnet, dass** jeder der Zweige in Reihe zwischen der optischen Quelle und der Masse angeordnet ist, wobei jeder Zweig einen Transistor und einen Widerstand in Reihe umfasst, wobei die Basis des Transistors mit einer entsprechenden logischen Ausgabe des Konversionsmoduls verbunden ist.

8. Sender nach einem der Ansprüche 1 bis 6, **dadurch gekennzeichnet, dass** jeder der Zweige in Reihe zwischen der optischen Quelle und der Masse angeordnet ist, wobei jeder Zweig eine Gruppe von parallelen Transistoren und einen Widerstand in Reihe umfasst, wobei die Basen der Transistoren der Gruppe mit ein und derselben logischen Ausgabe des Konversionsmoduls verbunden sind.

9. Sender nach einem der vorhergehenden Ansprüche, **dadurch gekennzeichnet, dass** das optische Kommunikationssystem ein Li-Fi-System ist.

10. Sender nach einem der vorhergehenden Ansprüche, **dadurch gekennzeichnet, dass** die optische Quelle eine LED ist.

## Claims

1. A transmitter for a wireless optical communication system comprising a *M*-PAM modulator (310, 410) transforming data to be transmitted into PAM alphabet symbols with *M* levels where *M* > 2 and an optical source (335, 435) for transmitting said data, **characterised in that** it comprises:
- a conversion module (320, 420) adapted to convert, from a one-to-one conversion table, each *M*-PAM symbol into a plurality of logic outputs;
- a plurality of parallel branches (337, 437), each branch comprising a switched current source (339, 439), mounted in series with the optical source, each switched current source being controlled by a logic output of the conversion module.

2. The transmitter according to claim 1, **characterised in that** the conversion module is adapted to convert each *M*-PAM symbol into a binary word with a size *M*-1, the intensities of the switched current sources having an identical value (*I*₀).

3. The transmitter according to claim 2, **characterised in that** the conversion module is adapted to convert each *M*-PAM symbol into a binary word comprising *n* bits in a first logic state and *N-n* bits in a complementary logic state, *n* being the level of the *M*-PAM symbol.

4. The transmitter according to claim 3, **characterised in that** the binary word is a thermometric code word.

5. The transmitter according to claim 1, **characterised in that** the conversion module is adapted to convert each *M*-PAM symbol into a binary word with a size *µ* = log₂(*M*), the intensities of the switched current sources having values equal to *I*₀, 2*I*₀, ..., 2^{µ-1}*I*₀ where *I*₀ is a predetermined intensity value.

6. The transmitter according to claim 1, **characterised in that** the conversion module is adapted to convert each *M*-PAM symbol into a binary word with a size *µ* = *log₂(M),* the intensity of the switched current source connected to the logic output m = 0, ..., *µ*-1 of the conversion module being selected so that the light power of the optical source is equal to 2^{m}Φ₀, where Φ₀ is a predetermined light power.

7. The transmitter according to one of the previous claims, **characterised in that** each of the branches is disposed in series between the optical source and the ground, each branch comprising a transistor and a resistor in series, the base of the transistor being connected to a corresponding logic output of the conversion module.

8. The transmitter according to one of claims 1 to 6, **characterised in that** each of the branches is disposed in series between the optical source and the ground, each branch comprising a group of transistors in parallel and a resistor in series, the bases of said transistors of said group being connected to a same logic output of the conversion module.

9. The transmitter according to one of the previous claims, **characterised in that** the optical communication system is a Li-Fi system.

10. The transmitter according to one of the previous claims, **characterised in that** the optical source is a LED.
